# EUROPEAN PATENT APPLICATION

(11) **EP 0 980 042 A1**
(43) Date of publication of application: **16.02.2000**
(21) Application number: 98905683.3
(22) Date of filing: 27.02.1998
(51) Int. Cl.: G06F 17/30

(54) **INFORMATION RETRIEVAL SYSTEM AND INFORMATION PROCESSING SYSTEM**

(71) Applicant: MITSUBISHI DENKI KABUSHIKI KAISHA, Tokyo 100-8310 (JP)
(72) Inventor: GOUZU, Tomonobu, Mitsubishi Denki Kabushiki Kaisha, Tokyo 100-8310 (JP)
(74) Representative: Pfenning, Meinig & Partner
(86) International application number: JP9800809
(87) International publication number: WO9944153

(57) **Abstract**

The information retrieval system of the present invention comprises: transmitting means for outputting image information and image identification information indicative of the kind of the image information; display means for displaying an image based on the image information; position specifying means for specifying an arbitrary position in the image displayed on the display means and for outputting position information based on the specified position; and data holding means for holding, based on the position information and the image identification information, data associated with the image specified by the position specifying means; and the data associated with the image specified by the position specifying means is displayed on the display means.

Accordingly, the position of an icon in each image of a moving picture need not be identified for each image frame, and all images need not be entered as digital data into a computer; hence, the amount of information to be managed and kept can be suppressed.

## Description

### TECHNICAL FIELD

The present invention relates to a system in which information associated with a particular image in a moving picture can be retrieved in response to an instruction from an input part.

### BACKGROUND ART

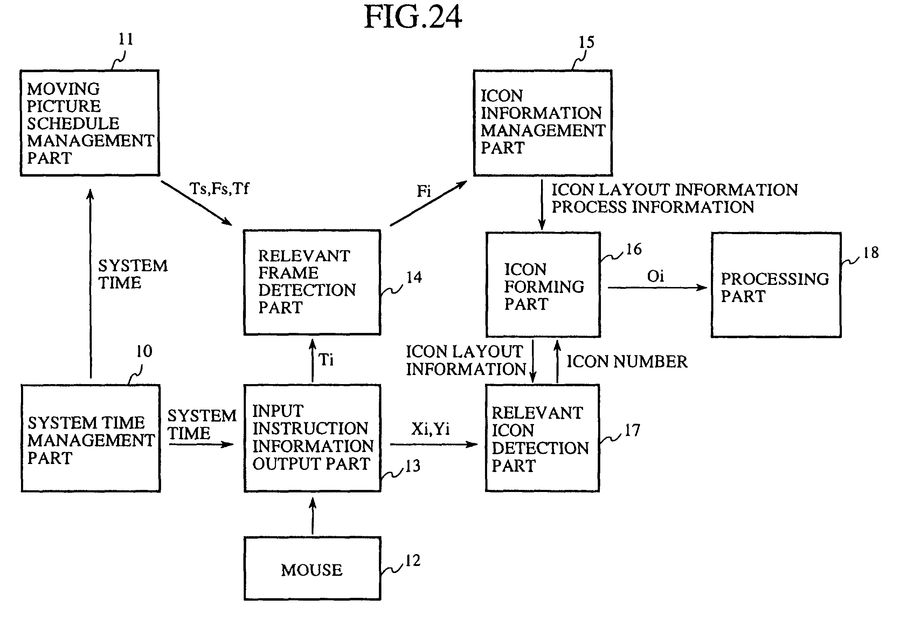

Examples of an image-based information retrieval system for retrieving information associated with an image from a moving picture and an image-based information processing system for processing such image-associated information retrieved from a moving picture are disclosed in Japanese Pat. Appln. Laid-Open Gazette No. 22124/94; the conventional systems are depicted in Fig. 24. Fig. 24 is a block diagram illustrating the configurations of the traditional information retrieval system and information processing system.

In Fig. 24, reference numeral 10 denotes a system time management part, which conducts the time management of the system. Reference numeral 11 denotes a moving picture schedule management part, which is connected to the system time management part 10. The moving picture schedule management part 11 manages information about the moving picture starting time Ts, the starting frame number Fs and the frame display speed Tf. Reference numeral 12 denotes a mouse that is an instruction input means. Reference numeral 13 denotes an input-instruction information output part, which is connected to the system time management part 10 and the mouse 12. The input-instruction information output part 13 outputs information such as coordinates (Xi, Yi) specified by an instruction entered via the mouse 12 and the instruction-issuance time Ti. Reference numeral 14 denotes a relevant frame detection part, which is connected to the moving picture schedule management part 11 and the input-instruction information output part 13. The relevant frame detection part 14 provides a relevant frame number Fi based on the information about the starting time Ts, the starting frame number Fs and the frame display speed Tf output from the moving picture schedule management part 11 and the information about the instruction time Ti output from the input-instruction information output part 13. Reference numeral 15 denotes an icon information management part, which is connected to the relevant frame detection part 14. Based on the frame number Fi fed from the relevant frame detection part 14, the icon information management part 15 holds icon layout information and icon processing information for each frame. Reference numeral 16 denotes an icon forming part, which is connected to the icon information management part 15. Reference numeral 17 denotes a relevant icon detection part, which is connected to the input-instruction information output part 13 and the icon forming part 16. Based on the information about the specified coordinates (Xi, Yi) fed from the input-instruction information output part 13 and the icon layout information in the relevant frame fed from the icon information management part via the icon forming part 16, the relevant icon detection part 17 detects an icon specified by the mouse 12. Upon detecting the predetermined icon, the relevant icon detection part 17 outputs information about a predetermined processing management number Oi assigned to the detected icon. Reference numeral 18 denotes a processing part, which is connected to the icon forming part 16. The processing part 18 performs a process corresponding to the detected icon based on the processing management number Oi detected by the relevant icon detection part 17 and fed therefrom via the icon forming part 16.

Next, a description will be given of the operation of the conventional information retrieval system and information processing system depicted in Fig. 24. In the first place, a moving picture begins to move. Then, the moving schedule management part 11 outputs the system time provided from the system time management part 10, as the moving picture starting time Ts, to the relevant frame detection part 14. Furthermore, the moving picture schedule management part 11 outputs to the relevant frame detection part 14 the information about the moving picture starting frame number Fs of the moving picture having begun to move and frame display speed Tf of the moving picture. Next, when a user of this conventional information retrieval and processing system specifies a certain point in the moving picture with the mouse 12, information about the coordinates (Xi, Yi) specified with the mouse 12 is provided therefrom to the input-instruction information output part 13. Supplied with the information about the coordinates (Xi, Yi) of the point specified with the mouse 12, the input-instruction information output part 13 regards the system time when it was supplied with the information about the specified coordinates (Xi, Yi), as the instruction-issuance time Ti, and provides information about the time Ti to the relevant frame detection part 14. Incidentally, the system time which is provided to the input-instruction information output part 13 is fed from the system time management part 10. The information about the specified coordinates (Xi, Yi) provided to the input-instruction information output part 13 is fed to the relevant icon detection part 17. The relevant frame detection part 14, which is supplied with the information about the instruction-issuance time Ti, detects the relevant frame number Fi designated with the mouse 12 based on the information about the instructed time Ti, the starting time Ts, the starting frame number Fs and the frame display speed Tf. Information about the frame number Fi detected by the relevant frame detection part 14 is provided to the icon information management part 15. Supplied with the information about the frame number Fi, the icon information management part 15 determines the icon layout information and icon processing information likely to be specified with the mouse 12 based on the information about the frame number Fi, and outputs the thus determined information to the icon forming part 16. Incidentally, the icon layout information has a structure in which the coordinates where an icon is positioned and an icon number assigned to the icon are associated with each other. The icon processing information has a structure in which the icon number and the processing management number Oi indicating the kind of the process specified by the icon concerned are associated with each other. When supplied with the icon layout information and icon processing information from the icon information management part 15, the icon forming part 16 provides the icon layout information to the relevant icon detection part 17. Based on the information about the coordinates (Xi, Yi) specified with the mouse 12 and fed thereto via the input-instruction information output part 13 and the icon layout information fed thereto via the icon edit part 16 from the icon information management part 15, the relevant icon detection part 17 detects the icon number concerned and provides information about the detected icon number to the icon forming part 16. When supplied with the information about the icon number detected by the relevant icon detection part 17, the icon forming part 16 refers to the icon processing information fed thereto from the icon information management part 15, detects the processing management number Oi which indicates the kind of the process specified by the icon of the detected icon number, and outputs information about the processing management number Oi to the processing part 18. The processing part 18 performs a predetermined process based on the information about the processing management number Oi provided from the icon forming part 16.

According to the conventional image-based information retrieval system and information processing system, since the position of an icon in the moving picture is detected for each picture frame as described above, it is necessary to enter all pictures as digital data into a computer. On this account, the abovementioned traditional information retrieval system and information processing system discriminate an arbitrary picture frame from a real-time picture as of TV broadcasting, satellite broadcasting or video and perform real-time processing based on the discriminated icon, and hence they have a problem that real-time image information needs to be entered into the computer at a very high processing speed.

Furthermore, in the abovementioned conventional information retrieval system and information processing system, the information about icons to be laid out in pictures must be managed for each picture frame, which gives rise to the problem of a massive amount of information to be managed and maintained.

### DISCLOSURE OF THE INVENTION

The present invention is intended to solve these problems, and has for its object to provide an information retrieval and an information processing system which suppress the amount of information to be managed and maintained and hence are simple-structured in their entirety.

To attain the above objective, the information retrieval system according to an aspect of the present invention comprises: transmitting means which outputs image information and image identification information indicating the kind of the image information; display means which displays an image based on the image information; position specifying means which specifies a desired position in the image displayed on the display means and outputs position information based on the specified position; and data holding means which hold data associated with the image specified by the position specifying means based on the position information and the image identification information, the data associated with the image specified by the position specifying means being fed to the display means.

The information retrieval system according to another aspect of the present invention comprises: transmitting means which outputs image information, image identification information indicating a change in the kind of image information and time information about the elapsed time after the change in the kind of image information; display means which displays an image based on the image information; position specifying means which specifies a desired position in the image displayed on the display means and outputs position information based on the specified position; and data holding means which holds data associated with the image specified by the position specifying means based on the position information, the image identification information and the time information, the data associated with the image specified by the position specifying means being fed to the display means.

The information retrieval system according to another aspect of the present invention comprises: transmitting means which outputs image information, image identification information indicating the kind of the image information and specified area information indicating the presence or absence of interrupt information during the outputting of the image information; display means which displays an image based on the image information; position specifying means which specifies a desired position in the image displayed on the display means and outputs position information based on the specified position; and data holding means which holds data associated with the image specified by the position specifying means based on the position information, the image identification information and the specified area information, the data associated with the image specified by the position specifying means being fed to the display means.

The information processing system according to another aspect of the present invention comprises: transmitting means which outputs image information and image identification information indicating the kind of the image information; display means which displays an image based on the image information; position specifying means which specifies a desired position in the image displayed on the display means and outputs position information based on the specified position; and process executing means which executes a process associated with the image specified by the position specifying means based on the position information and the image identification information.

The information retrieval system according to another aspect of the present invention comprises: transmitting means which outputs image information, image identification information indicating a change in the kind of image information and time information about the elapsed time after the change in kind of the image information; display means which displays an image based on the image information; position specifying means which specifies a desired position in the image displayed on the display means and outputs position information based on the specified position; and process executing means which executes a process associated with the image specified by the position specifying means based on the position information, the image identification information and the time information.

The information retrieval system according to still another aspect of the present invention comprises: transmitting means which outputs image information, image identification information indicating the kind of the image information and specified area information indicating the presence or absence of interrupt information during the outputting of the image information; display means which displays an image based on the image information; position specifying means which specifies a desired position in the image displayed on the display means and outputs position information based on the specified position; and process executing means which executes a process associated with the image specified by the position specifying means based on the position information, the image identification information and the specified area information.

The information retrieval system or information processing system according to the present invention includes control means for controlling the transmission of image information from the transmitting means.

### BRIEF DESCRIPTION OF THE DRAWINGS

Fig. 1 is a block diagram of Embodiment 1 of the present invention.
Fig. 2 is a diagram showing the relationship between an image and its indication in Embodiment 1 of the present invention.
Fig. 3 is a diagram depicting the format of image-associated data stored in a table in Embodiment 1 of the present invention.
Fig. 4 is a block diagram of Embodiment 2 of the present invention.
Fig. 5 is a diagram showing the relationship between an image and its indication in Embodiment 2 of the present invention.
Fig. 6 is a diagram depicting the format in which image-associated data is stored in a table in Embodiment 2 of the present invention.
Fig. 7 is a block diagram of Embodiment 3 of the present invention.
Fig. 8 is a diagram showing the relationship between an image and its indication in Embodiment 3 of the present invention.
Fig. 9 is a diagram depicting the format of image-associated data stored in a table in Embodiment 3 of the present invention.
Fig. 10 is a block diagram of Embodiment 4 of the present invention.
Fig. 11 is a block diagram of Embodiment 5 of the present invention.
Fig. 12 is a diagram showing the relationship between an image and its indication in Embodiment 5 of the present invention.
Fig. 13 is a block diagram of Embodiment 6 of the present invention.
Fig. 14 is a diagram showing the relationship between an image and its indication in Embodiment 6 of the present invention.
Fig. 15 is a block diagram of Embodiment 7 of the present invention.
Fig. 16 is a diagram depicting the format of process contents stored in a table in Embodiment 7 of the present invention.
Fig. 17 is a block diagram of Embodiment 8 of the present invention.
Fig. 18 is a diagram depicting the format of process contents stored in Embodiment 8 of the present invention.
Fig. 19 is a block diagram of Embodiment 9 of the present invention.
Fig. 20 is a diagram depicting the format of process contents stored in Embodiment 9 of the present invention.
Fig. 21 is a block diagram of Embodiment 10 of the present invention.
Fig. 22 is a block diagram of Embodiment 11 of the present invention.
Fig. 23 is a block diagram of Embodiment 12 of the present invention.
Fig. 24 is a block diagram depicting the prior art.

### BEST MODE FOR CARRYING OUT THE INVENTION

Next, the present invention will be described with reference to its embodiments.

### EMBODIMENT 1

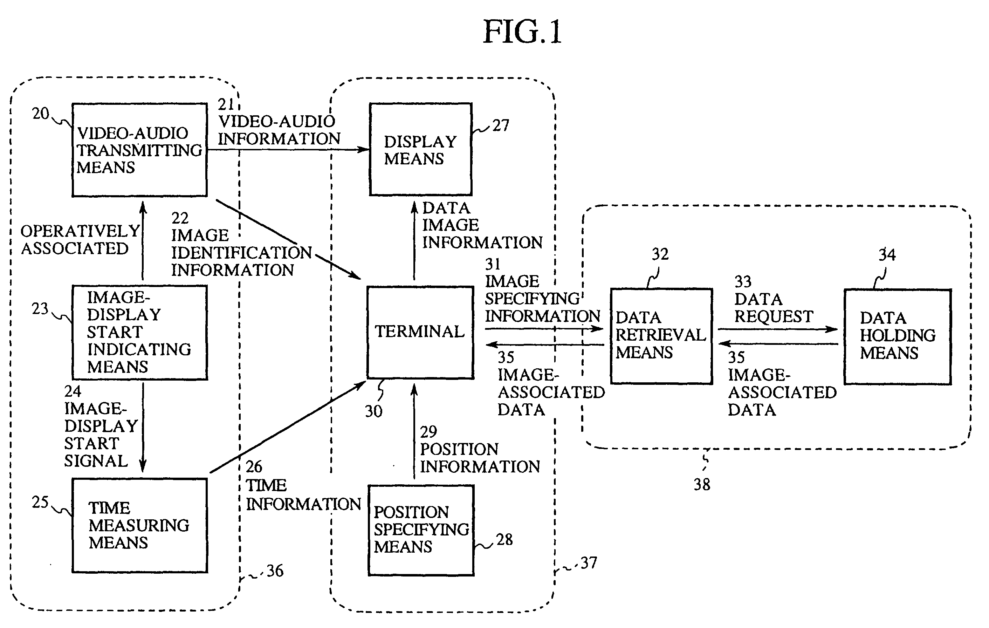

A description will be given, with reference to Fig. 1, of an embodiment of the image-based information retrieval system according to the present invention. Fig. 1 illustrates in block form the information retrieval system of Embodiment 1. In Fig. 1, reference numeral 20 denotes video-audio transmitting means, which outputs video-audio information in real time as in the case of a TV broadcasting station or communication satellite. Reference numeral 21 denotes the video-audio information, which is the information about image and sound that is output from the video-audio transmitting means 20. Reference numeral 22 denotes image identification information, which is provided from the video-audio transmitting means 20 to identify the kind of the video-audio information 21 output therefrom. Reference numeral 23 denotes an image-display start indicating means, which is connected to the video-audio transmitting means 20. The image-display start indicating means 23 is operatively associated with the video-audio transmitting means 20 and, upon outputting of the image identification information 22 from the video-audio transmitting means 20, outputs an image-display start signal 24 indicating the start of the displaying of a new image. Reference numeral 25 denotes time measuring means, which is connected to the image-display start indicating means 23. The time measuring means 25 responds to the image-display start signal 24 from the image-display start indicating means 23 to begin the measurement of time and outputs time information 26 based on the measured time. Incidentally, the time information 26 may also be obtained by starting the measurement of time at an arbitrary point in time different from that at which the image-display start signal 24 is provided. Reference numeral 27 denotes display means, which is connected to the video-audio transmitting means 20. The display means 27 displays images and plays sounds as in the case of a TV for instance, based on the video-audio information 21 from the video-audio transmitting means 20. Reference numeral 28 denotes position specifying means; by using the position specifying means 28, for instance, just like a mouse or touch panel of a computer, it is possible for a user of this system to specify an arbitrary object displayed on the display means 27. When used to specify an arbitrary object on the display means 27, the position specifying means 28 outputs position information 29 on the position (X, Y) of the specified object on the display screen. Reference numeral 30 denotes a terminal, which is connected to the video-audio transmitting means 20, the time measuring means 25, the position specifying means 28 and the display means 27. Based on the video identification information 22, the time information 26 and the position information 29 fed thereto, the terminal 30 outputs image specifying information 31 which is formed by an associated set of these pieces of information. Reference numeral 32 denotes data retrieval means, which is connected to the terminal 30. The data retrieval means 32 has a table in which the kind of an image, the time specified by the position specifying means 28 and the position specified by the position specifying means 28 are associated with one another and these pieces of information and the kind of image-associated data are associated with one another. And the data retrieval means 32 is supplied with the image specifying information 31 formed by the associated set of the image identification information 22, the time information 26 and the position information 29. Based on these predetermined pieces of information stored on the table and the video specifying information 21 input thereinto, the data retrieval means 32 outputs a data request signal 33 that demands the retrieval of the image-associated data concerned. Reference numeral 34 denotes data holding means, which is connected to the data retrieval means 32. The data holding means 34 has held therein a plurality of kinds of image-associated data. And the data holding means 34 responds to the data request signal 33 to retrieve predetermined image-associated data. The image-associated data thus retrieved is provided via the data retrieval means 32 to the terminal 30. The image-associated data 35 fed to the terminal 30 is converted therein to data image information, which is provided to the display means 27. Reference numeral 36 denotes a transmitting system, which is made up of the video-audio transmitting means 20, the image-display start indicating means 23 and the time measuring means 25. Reference numeral 37 denotes a receiving system, which is made up of the display means 27, the position specifying means 28 and the terminal 30. Reference numeral 38 denotes a recording system, which is made up of the data retrieval means 32 and the data holding means 34.

Incidentally, when an image based on the video-audio information 21 is displayed on the display means 27, its display position is fixed regardless of the specifications of the display means 27.

In the information retrieval system of Embodiment 1, a plurality of receiving systems 37 may be connected to one transmitting system 36. In this instance, the video-audio transmitting means 20 of the transmitting system 36 provides the video-audio information to the display means 27 of each receiving system 37. And the video-audio transmitting means 20 of the transmitting system 36 provides the image identification information 22 to the terminal 30 of each receiving system 37. Furthermore, the time measuring means 25 of the transmitting system 36 provides the time information 26 to the terminal 30 of each receiving system 37.

In the information retrieval system of Embodiment 1, one recording system 38 may be connected to a plurality of receiving systems 37. In this case, the image specifying information 31 from the terminals 30 of the plural receiving systems 37 is processed by the data retrieval means 32 of the recording system 38, and the desired image-associated data 35 is provided to each corresponding terminal 30. The recording system 38 may be placed on the Internet or similar network or at the same place as a certain terminal 30 or display means 27.

The image-associated data 35 is such as video, audio, or character data.

The image-associated data 35, which is held in the data holding means 34, is created based on the corresponding video-audio information 21 before it is output from the video-audio transmitting means 20.

The video-audio information 21 is a concatenation of image segments, and the image segments mentioned herein are pieces of image information which differ in contents and require several seconds to several hours for outputting them.

The image identification information 22 is information for identifying the individual image segments.

The video-audio information 21, the image identification information 22 and the image-display start signal 24 are simultaneously output from the video-audio transmitting means 20 or image-display start indicting means 23, and are transmitted by radio waves or electric signals.

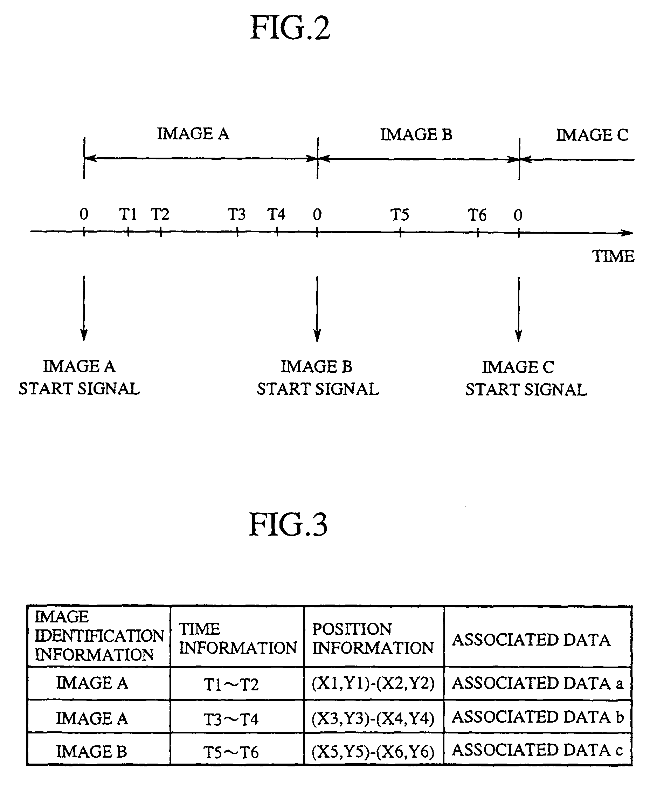

Next, a description will be given, with reference to Fig. 2, of the correlation among the video-audio information 21, the image identification information 22 and the time information 26 based on the image-display start signal 24 in the information retrieval system of Embodiment 1. Fig. 2 is a conceptual diagram depicting the correlation among the video-audio information 21, the image identification information 22 and the time information 26 based on the image-display start signal 24 in the information retrieval system of Embodiment 1. In Fig. 2, images A, B and C are image segments, and these images A to C are continuously concatenated to form the video-audio information 21. When the video-audio transmitting means 20 start to output these images A to C, the image identification information 22 on each of the images A to C is output from the video-audio transmitting means 20, and at the same time, the image-display start signal 24 is provided from the image-display start indicating means 23 which is operatively associated with the video-audio transmitting means 20.

In response to the image-display start signal 24 provided from the image-display start indicating means 23, the time measuring means 25 outputs the time information 26 to the terminal 30. The time information 26 is reset upon each output of the image-display start signal; T1 to T4 is the relative time period concerning the image A the measurement of which begins at the same time as the image-display start signal 24 is provided for the image A, and T5 to T6 is the relative time concerning the image B the measurement of which begins at the same time as the image-display start signal 24 is provided for the image B.

Next, a description will be given, with reference to Fig. 3, of a table of the data retrieval means 32 in the information retrieval system of Embodiment 1. Fig. 3 is a conceptual diagram of the table of the data retrieval means 32 in the information retrieval system of Embodiment 1. In Fig. 3, the kind of each image segment forming the video-audio information 21, the elapsed time after the start of outputting of information on each image segment from the video-audio transmitting means 20, position information on an icon that appears a predetermined elapsed time after the start of outputting of the information on each image segment from the video-audio transmitting means 20, and the kind of image-associated data which is output by the designation of the icon concerned are recorded on the table in association with one another. Incidentally, the position information on the position of the icon that is recorded on the table of the data retrieval means 32 is defined by X-Y coordinates of two arbitrary points on the display screen of the display means 27 regarded as a plane described by X-Y coordinates. And, a rectangle with its diagonal lines defined by the X-Y coordinates of these two points is the position where to set the icon concerned. The area of the icon concerned may also be specified using a mathematical expression of straight or curved lines. Also it is possible to regard the display screen as a set of dots and specify the area of the icon by a complementary set of dots. Incidentally, let it be assumed that the X-Y coordinates of an arbitrary point, which are recorded on the table, correspond to X-Y coordinates on the display screen of the display means 27. Moreover, the table may contain kinds of arbitrary image segments, position information on the positions of a plurality of icons corresponding to elapsed times concerning the image segments and image-associated data which are specified by the icons, respectively. Additionally, icons for outputting image-associated data need not be provided in connection with all image segments, or over the entire period of time during which the image segments are being displayed, or at all the positions on the display means 27 where the image segments are being displayed.

Next, the operation of the information retrieval system of Embodiment 1 will be described.

In the first place, the video-audio information 21 is output from the video-audio transmitting means 20.

Then, the video-audio transmitting means 20 continuously provides the video-audio information 21 to the display means 27. The display means 27 displays an image based on the video-audio information 21. Furthermore, the video-audio transmitting means 20 outputs to the terminal 30 the image identification information 22 for identifying the delimitation of information about the image segments forming the video-audio information 21. Incidentally, the image identification information 22 fed to the terminal 30 is held there. The image-display start indicating means 23 operates in association with the video-audio transmitting means 20, and outputs the image-display start signal 24 to the time measuring means 25 at the instance when the transmitting means begins to send information on a certain image segment contained in the video-audio information 21. On the input thereinto the image-display start signal 24, the time measuring means 25 starts to measure time, and periodically outputs to the terminal 30 the time information 26 representative of the elapsed time from the beginning of the time measurement. Next, to retrieve information on an arbitrary image displayed on the display means 27, an arbitrary point in the desired image displayed on the display means 27 is specified using the position specifying means 28 connected to the terminal 30. Incidentally, the arbitrary point of the desired image, which is specified by the position specifying means 28, refers to a certain point in an object, character, graphic form or the like displayed on the screen of the display means 27. The position specifying means 28 provides as the position information 29 to the terminal 30 the X-Y coordinates of the specified point in the object or the like displayed on the display means 27. Supplied with the position information 29, the terminal 30 outputs as the image specifying information 31 to the data retrieval means 32 an associated version of the position information 29, the time information on the instant of the input thereto of the position information 29, and the video identification information 22 for identifying the kind of the image provided to the display means 27 at the instant of the input of the position information 29.

And, the data retrieval means 32 refers to its table and the image specifying information 31 fed thereto. As the result of this reference, the data retrieval means 32 outputs to the data holding means 34 a data request signal 33 that instructs it to output the image-associated data concerned.

The data holding means 34 outputs image-associated data 35 in response to the date request signal 33 applied thereto. Incidentally, when the data holding means 34 does not have the image-associated data 35 corresponding to the data request signal 33 provided thereto, it outputs information to that effect as the image-associated data 35. The image-associated data 35 provided from the data holding means 34 is fed via the data retrieval means 31 to the terminal 30. The terminal 30 converts the image-associated data 35 into data image information for input into the display means 27, and provides it to the display means 27. Based on the data image information fed thereto, the display means 27 displays information about the image-associated data in a limited area or all over the entire area of the screen of the display means 27. Incidentally, the position specifying means 28 may specify two or more points as well as one point. When two or more points are specified by the position specifying means 28, too, the same retrieval processing as mentioned above is performed.

As described above, the image-based information retrieval system of this embodiment specifies an arbitrary point of an arbitrary object displayed on the display means 27 by the position specifying means 28 and retrieves the image-associated data concerned. And, this system retrieves and outputs the image-associated data based on the position information 29 that is the X-Y coordinates of an arbitrary position on the display means 27 specified by the position specifying information 28 and the time information 26 about the time when the position was specified. That is, the conventional system specifies one of frames at an arbitrary time, detects information about the outputting of image-associated data set in the specified frame by specifying the coordinates of an arbitrary point of the image on the display means in relation to the time of specifying the frame, and outputs the image-associated data; on the other hand, the system of this embodiment merely outputs the image-associated data by specifying the coordinates of an arbitrary point of the display image on the display means 27 at an arbitrary point in time.

Accordingly, this system need not retain every frame information concerning images, that is, the system does not need to hold an enormous amount of information--this permits downsizing of the process information retrieval means 48 and the entire system configuration. Furthermore, this system does not require any processing unit for detecting a particular frame, and hence it can easily be downsized in its entirely. Moreover, this system does not involve processing for detecting a particular frame, which permits reduction of time preceding the execution of the process associated with the specified image. Besides, since predetermined time slots and areas for specifying the coordinates on the display means 27 are preset on the table of the process information retrieval means 48, this system need not retain information for the execution of the associated process set in every frame containing the image to be displayed, that is, the system does not need to hold a massive amount of information, which permits simplification of the table of the process information retrieval means 48 and/or the process information retrieval means 48 itself. In addition, since the video-audio information 21 and the time information 26 are output from the transmitting system 36 of this system in relation to each other, the same information associated with an arbitrary image can be obtained in a plurality of receiving system 37 of different locations even if the video-audio information 21 and the time information 26 are received by the different receiving systems 37. In the case where the video-audio information 21 is sent from the transmitting system 36 and the plurality of receiving systems 37, which receive the video-audio information 21 from the transmitting system 36, individually calculate the time information 26 and begin to measure the time information 26 simultaneously with the start of outputting of the video-audio information 21 from the transmitting system 36, the time of arrival of the video-audio information 21 at the receiving systems varies according to their location, incurring the possibility that the information associated with the same image differs with the individual receiving systems 37.

### EMBODIMENT 2

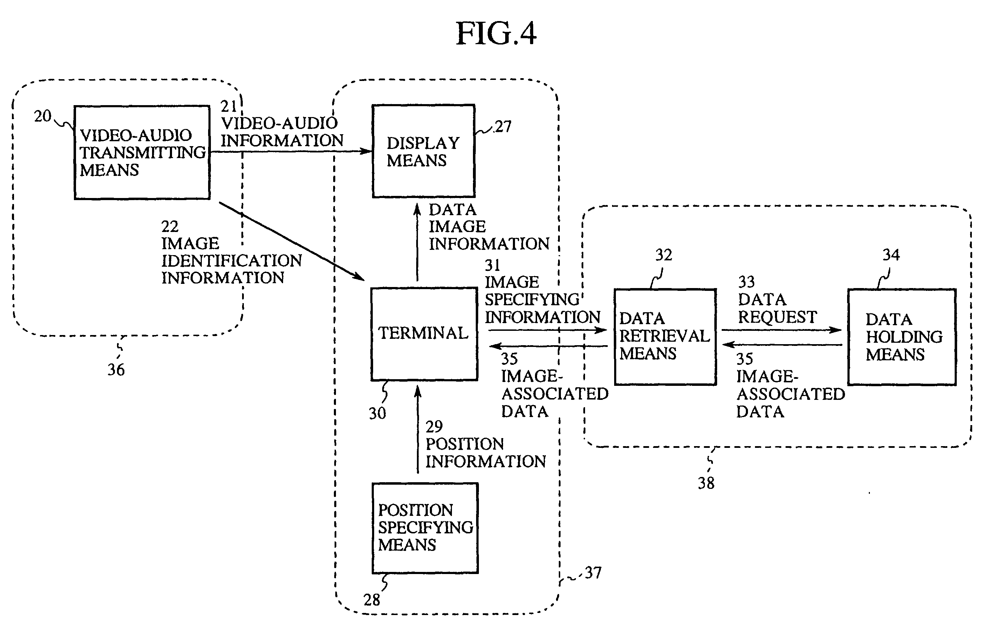

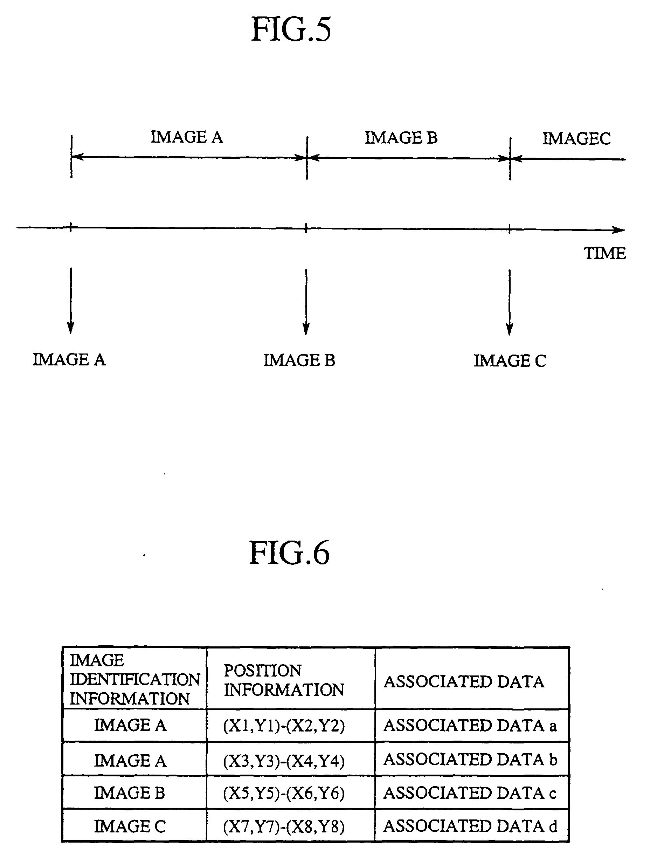

Another embodiment of the image-based information retrieval system according to the present invention will be described with reference to Fig. 4. Fig. 4 is a block diagram illustrating the configuration of the information retrieval system according to Embodiment 2. Incidentally, the transmitting system 36 in Embodiment 1 is formed by the video-audio transmitting means 20. And, in Fig. 4 the parts identical with or corresponding to those in Embodiment 1 of Fig. 1 are identified by the same reference numerals and no description will be repeated thereon. Next, a description will be given, with reference to Fig. 5, of the correlation between the video-audio information 21 and the image identification information 22 in the information retrieval system of Embodiment 2.

Fig. 5 is a conceptual diagram showing the correlation between the video-audio information 21 and the image identification information 22 in the information retrieval system of Embodiment 2.

In Fig. 5, images A, B and C are image segments, and these images A to C are continuously concatenated to form the video-audio information 21. When the video-audio transmitting means 20 start to output these images A to C, the image identification information 22 on each of the images A to C is output from the video-auto transmitting means 20.

Next, a description will be given, with reference to Fig. 6, of a table of the data retrieval means 32 in the information retrieval system of Embodiment 2. Fig. 6 is a conceptual diagram of the table of the data retrieval means 32 in the information retrieval system of Embodiment 1. In Fig. 6, the kind of each image segment forming the video-audio information 21, position information on an icon that appears at the timing of outputting of the image segment, and the kind of image-associated data which is output at the time of specifying the icon concerned are recorded on the table in association with one another.

Next, the operation of the information retrieval system of Embodiment 2 will be described.

In the first place, the video-audio information 21 is output from the video-audio transmitting means 20.

Then, the video-audio transmitting means 20 continuously outputs the video-audio information 21 to the display mans 27. The display means 27 displays an image based on the video-audio information 21. Furthermore, the video-audio transmitting means 20 provides to the terminal 30 the image identification information 22 for identifying the delimitation of information about the image segments forming the video-audio information 21. Incidentally, the image identification information 22 fed to the terminal 30 is held there.

The video-audio transmitting means 20 outputs the image identification information 22 to the terminal 30 at the instant when the transmission of each image segments or the information on the image segment is started. In the terminal 30 the image identification information 22 fed thereto is recorded, and the record is updated on each input of new image identification information.

Next, to retrieve information on an arbitrary image displayed on the display means 27, an arbitrary point of the desired image displayed on the display means 27 is specified using the position specifying means 28 connected to the terminal 30. The arbitrary point of the desired image, which is specified by the position specifying means 28, refers to a certain point in an object, character, graphic form or the like displayed on the screen of the display means 27.

The position specifying means 28 outputs as the position information 29 to the terminal 30 the X-Y coordinates of the specified point in the object or the like displayed on the display means 27. Supplied with the position information 29, the terminal 30 outputs as the image specifying information 31 to the data retrieval means 32 an associated version of the position information 29 and the image identification information 22 for identifying the kind of image displayed on the display means 27 at the instant of the input of the position information 29.

The information retrieval system according to Embodiment 2 is identical with the system of Embodiment 1 in the operations from the outputting of the image specifying information 31 from the terminal 30 to the outputting of the data image information concerned to the display means 27, of which no description has been given, but the operation different from that of the information retrieval system of Embodiment 1 has been described.

As described above, in the image-based information retrieval system of this embodiment, the kind of the image segment displayed on the display means 27, such as a broadcast of a baseball game or commercial, is detected and the position information 29 in the image segment concerned is used to retrieve the image-associated data 35 or the data image information; this ensures that the information retrieval system accurately retrieves the image-associated data 35 and accurately displays the data image information concerned on the display means 27 even if the duration of the image segment concerned varies.

### EMBODIMENT 3

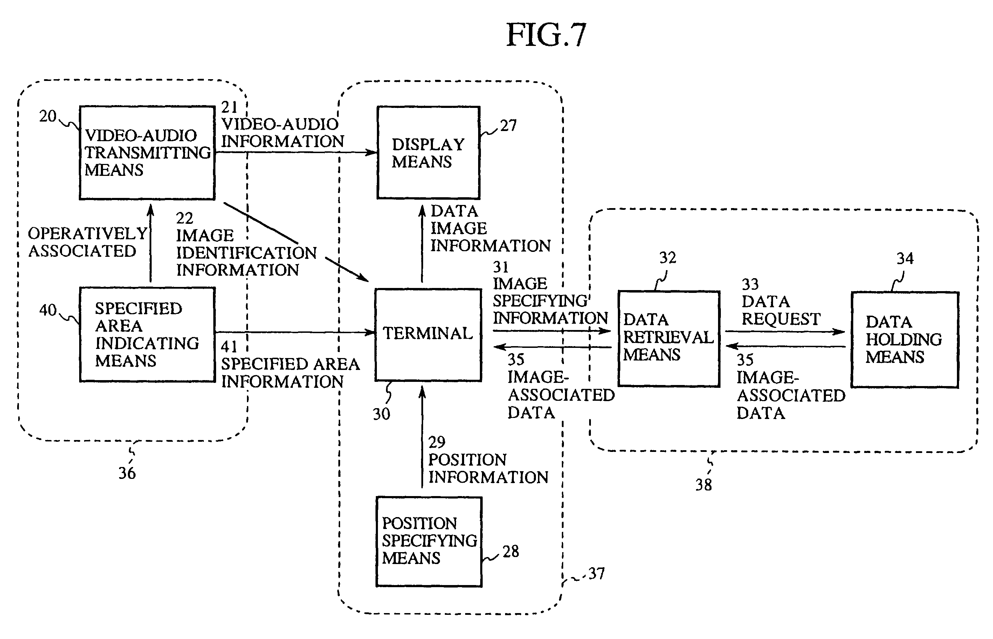

Another embodiment of the image-based information retrieval system according to the present invention will be described with reference to Fig. 7.

In Fig. 7, reference numeral 40 denotes specified area indicating means, which is connected to the video-audio transmitting means 20. The specified area indicating means 40 is operatively associated with the video-audio transmitting means 20, and outputs specified area information 41 corresponding to a change in the image identification information 22 provided from the video-audio transmitting means 20, notifying the terminal 30 of a change in the video area from one to another.

For example, when a broadcast of a baseball game changes to a spot commercial, the specified area information 41 is provided from the specified area indicating means 40, and based on the specified area information fed thereto, the terminal 30 detects the change from the broadcast of a baseball game to the commercial.

Incidentally, in Embodiment 3 the transmitting system is made up of the video-audio transmitting means 20 and the specified area indicting means 40. And, in Fig. 4 the parts identical with or corresponding to those in Embodiment 1 of Fig. 1 are identified by the same reference numerals and are not described; the above description is given of the parts different from those in Fig. 1.

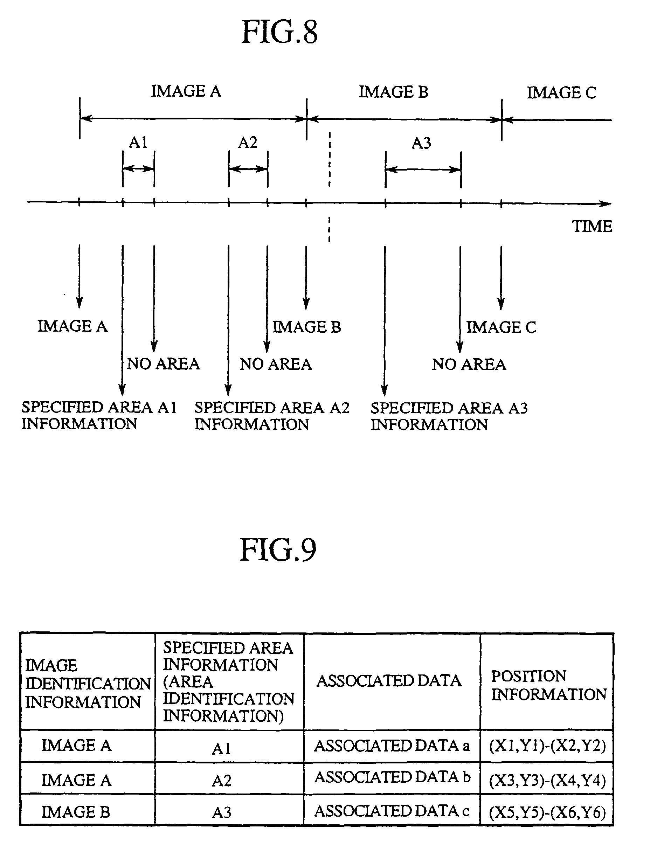

Next, a description will be given, with reference to Fig. 8, of the correlation among the video-audio information 21, the image identification information 22 and the specified area information 41 in the information retrieval system of Embodiment 3. Fig. 8 is a conceptual diagram depicting the correlation among the video-audio information 21, the image identification information 22 and the specified area information 41 in the information retrieval system of Embodiment 3.

In Fig. 8, images A, B and C are image segments, and these images A to C are continuously concatenated to form the video-audio information 21.

When the video-audio transmitting means 20 start to output these images A to C, the image identification information 22 corresponding to each of the images A to C is output from the video-audio transmitting means 20. And, when a specified area inserted in an arbitrary image segment is provided from the video-audio transmitting means 20, the specified area indicating means 40 operatively associated with the video-audio transmitting means 20 outputs the specified area information 41 associated with the specified are concerned.

Incidentally, the specified area may or may not be inserted in an arbitrary image segment, and when inserted, only one or more areas may be specified. Accordingly, the specified area information 41 may sometimes be output between arbitrary image segments or may not be output, and only one piece of information is provided in some cases, but in other cases two or more pieces of information are provided.

Incidentally, Fig. 8 illustrates an example in which: specified area information A1 is provided from the specified area indicating means 40 at the instant of starting the display of the image A of a specified area A1; specified area information A2 is provided from the specified area indicating means 40 at the instant of starting the display of the image A of a specified area A2 starts; and specified area information A3 is provided from the specified area indicating means 40 at the instant of starting the display of the image B of a specified area A3. Upon completion of the display of the image A of the specified area A1, the image A of the specified area A2 and the image B of the specified area A3, specified area information "no area" is output from the specified area indicating means 40.

Next, a description will be given, with reference to Fig. 9, of a table of the data retrieval means 32 in the information retrieval system of Embodiment 3. Fig. 9 is a conceptual diagram of the table of the data retrieval means 32 in the information retrieval system of Embodiment 3.

In Fig. 9, there are recorded on the table of the data retrieval means 32, in association with one another, the kind of each image segment forming the video-audio information 21, the presence or absence or of the kind of the most recently recognized specified area information, position information on an icon that appears at the timing when the image segment or specified area information is output, and the kind of image-associated data which is output at the time of specifying the icon concerned.

Next, the operation of the information retrieval system of Embodiment 3 will be described.

In the first place, the video-audio information 21 is output from the video-audio transmitting means 20. Then, the video-audio transmitting means 20 continuously outputs the video-audio information 21 to the display mans 27. The display means 27 displays an image based on the video-audio information 21. Furthermore, the video-audio transmitting means 20 outputs to the terminal 30 the image identification information 22 for identifying the delimitation of information about the image segments forming the video-audio information 21. Incidentally, the image identification information 22 fed to the terminal 30 is held there. The specified area indicating means 40 is operatively associated with the video-audio transmitting means 20, and outputs the specified area information 41 to the terminal 30 at the instant of starting the transmission of information about the specified area containing a video segment. And, the specified area information 41 input into the terminal 30 is recorded therein, and the record is updated with new specified area information that is input next.

Next, to retrieve information on an arbitrary image displayed on the display means 27, an arbitrary point of the desired image displayed on the display means 27 is specified using the position specifying means 28 connected to the terminal 30. The arbitrary point of the desired image, which is specified by the position specifying means 28, refers to a certain point in an object, character, graphic form or the like displayed on the screen of the display means 27. The position specifying means 28 outputs as the position information 29 to the terminal 30 the X-Y coordinates of the specified point in the object or the like displayed on the display means 27. Supplied with the position information 29, the terminal 30 outputs as the image specifying information 31 to the data retrieval means 32 an associated version of the position information 29, the specified area information 41 about the specified area where the image segment lies at the moment of the input of the position information 29 to the terminal and the image identification information 22 for identifying the kind of image provided to the display means 27 at the instant of the input of the position information 29.

Incidentally, the information retrieval system according to Embodiment 3 is identical with the system of Embodiment 1 in the operations from the outputting of the video specifying information 31 from the terminal 30 to the outputting of the data image information concerned to the display means 27, of which no description has been repeated, but the operation different from that of the information retrieval system of Embodiment 1 has been described.

As described above, in the image-based information retrieval system of this embodiment, the specified area of the image segment displayed on the display means 27, for example, a spot commercial in a broadcast of a baseball game, is detected and the position information 29 in the specified area concerned is used to retrieve the image-associated data 35 or the data image information; hence, even if the duration of the specified area concerned varies, the information retrieval system accurately retrieves the image-associated data 35 and accurately outputs the data image information concerned to the display means 27.

### EMBODIMENT 4

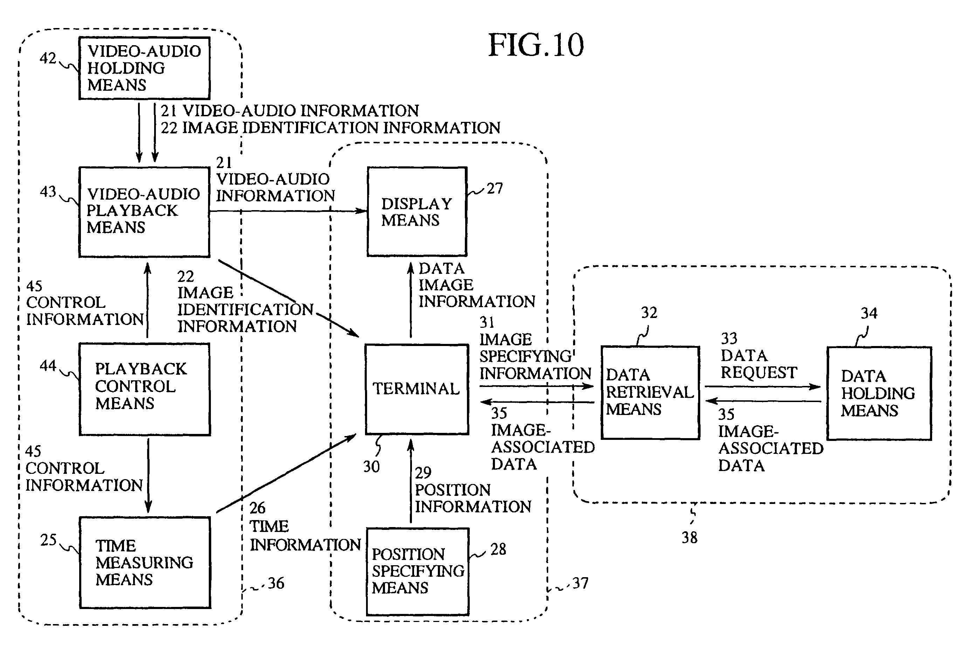

Another embodiment of the image-based information retrieval system according to the present invention will be described below with reference to Fig. 10. Fig. 10 is a block diagram illustrating the configuration of the information retrieval system of Embodiment 4.

In Fig. 10, reference numeral 42 denotes video-audio holding means such as a video tape or optical disk. On the video-audio holding means 42 there is recorded the video-audio information 21 such as video and audio information. Reference numeral 43 denotes video-audio playback means such as a video cassette recorder or optical disk deck. The video-audio playback means 43 reads out the video-audio information 21 recorded on the video-audio holding means 42, and based on the read-out video-audio information 21, plays back images and sounds and provides them to the display means 27. Furthermore, the video-audio playback means 43 supplies the terminal 30 with the image identification information 22 for identifying each image segment forming the video-audio information 21. The image identification information 22 is read out of the video-audio holding means 42 together with the video-audio information 21 and reproduced. Reference numeral 44 denotes playback control means, which controls the playback, fast forward, fast reverse, pause or similar mode for the video-audio information 21 read out by the video-audio playback means 43 from the audio-video holding means 42. The playback control means 44 provides control information 45 to the video-audio playback means 43 so as to effect control of playback, fast forward, fast reverse, pause and so forth in connection with the video-audio information 21. Further, the playback control means 44 sends the control information 45 to the time measuring means 25 as well so as to control the time information 26 for the control of the video-audio information 21 by the video-audio playback means 43. Based on the control information 45 fed from the playback control means 44, the time measuring means 25 can reset, pause, restart, fast-forward and fast-reverse the time measurement operation, and the fast-forwarding and fast-reverse speeds of the time measurement are equal to the fast-forward and fast-reverse speeds of the video-audio playback means 43.

In embodiment 4 the transmitting system 36 is made up of the video-audio holding means 42, the video-audio playback means 43, the playback control means 44 and the time measuring means 25. In Fig. 10 the parts identical with or corresponding to those in Embodiment 1 of Fig. 1 are identified by the same reference numerals, of which no description has been repeated, but the operation different from that of the information retrieval system of Fig. 1 has been described. The correlation among the video-audio information 21, the image identification information 22 and the time information 26 in the information retrieval system of Embodiment 4 is the same as in Embodiment of Fig. 1; hence, no description will be repeated in this respect. Moreover, the table of the data retrieval means 32 in the information retrieval system of Embodiment 4 is the same as in Embodiment 1 of Fig. 3; hence, no description will be repeated either.

Next, a description will be given of the operation of the information retrieval system according to Embodiment 4.

To begin with, the control information 45 on the start of playback is provided from the playback control means 44 to the video-audio playback means 43. Supplied with the control information 45, the video-audio playback means 43 reads out the video-audio information 21 and the image identification information 22 from the video-audio holding means 42 based on the control information 45.

Supplied with the video-audio information 21 and the image identification information 22, the video-audio playback means 43 converts the video-audio information 21 into a form for playback by the display means 27 and provides thereto the converted information and, at the same time, outputs the image identification information 22 to the terminal 30. Incidentally, the image identification information 22 fed to the terminal 30 is held therein. Supplied with the video-audio information 21, the display means 27 outputs images and sounds based on the video-audio information input thereto. The playback control means 44 sends the control information 45 and, at the same time, the playback control means 44 sends the control information 45 to the time measuring means 25 as well.

And, when supplied with the control information 45, the time measuring means 25 performs processing for the time measurement based on the control information 45. The time information 26 obtained with the time measuring means 25 is periodically sent to the terminal 30. Incidentally, in the case where the playback control means 44 outputs to the video-audio playback means 43 the control information 45 to the effect that the output from the video-audio information is caused to pause, the video-audio playback means 43 responds to the control information 45 to temporarily stop the outputting of the video-audio information 21 for playback to the display means 27. Such control information 45 is sent from the playback control means 44 to the video-audio playback means 43 and to the time measuring means 25 as well. When supplied with the control information 45, the time measuring means 25 responds thereto to temporarily stop the time measurement processing it has performed so far. In the case where the playback control means 44 sends to the video-audio playback means 43 the control information 45 for canceling the pause of the outputting of the video-audio information 21 and restarting it, the video-audio playback means 43 responds to the control information 45 to resume the outputting of the video-audio information 21 to the video-audio playback means 43 temporarily stopped until then. Such control information is sent from the playback control means 44 to the video-audio playback means 43 and to the time measuring means 25 as well. Supplied with such control information 45, the time measuring means 25 responds thereto to resume the time measurement processing temporarily stopped until then. Moreover, when the playback control means 44 sends to the video-audio playback means 43 the control information 45 for fast forwarding the video-audio information 21, the video-audio playback means responds to the control information 45 to fast forward the video-audio information 21 to the display means 27. Such control information 45 is sent from the playback control means 44 to the video-audio playback means 43 and to the time measuring means 25 as well. Supplied with such control information 45, the time measuring means 25 responds thereto to speed up the time measurement processing in accordance with the fast forwarding of the video-audio information 21. When the playback control means 44 sends to the video-audio playback means 43 the control information 45 for fast reversing the video-audio information 21, the video-audio playback means 43 fast reverses the video-audio information 21 that is output to the display means 27. Such control information 45 is provided from the playback control means 44 to the video-audio playback means 43 and to the time measuring means 25 as well. Supplied with the control information 45, the time measuring means 24 responds thereto to fast reverse the time measurement processing in accordance with the fast reversing of the video-audio information 21.

Incidentally, the image identification information 22 and the video-audio information 21 are linked with each other, and the image identification information 22 is provided based on control of the video-audio information 21 for playback, pause, pause cancellation, fast forward and fast reverse. The information retrieval system according to Embodiment 4 is identical with the system of Embodiment 1 in the operations from the retrieval of the information about an arbitrary image displayed on the display means 27 to displaying the retrieved information on the display means 27, of which no description has been given, but the operation different from that of the information retrieval system of Embodiment 1 has been described.

As described above, in the image-based information retrieval system of this embodiment, since the processing speed for playback, fast forward and fast reverse of the video-audio information 21 recorded in the video-audio holding means 42 such as a video or optical disk and the time-measuring speed of the time measuring means 25 are linked with each other, it is possible to suppress variations in the correlation between the image identification information 22 associated with the video-audio information 21 and the data associated with the time information 26 obtainable with the time measurement processing by the time measuring means 25--this permits the implementation of a highly reliable system.

Moreover, according to this system, since control means for controlling the method of outputting the image information from the transmitting means is provided to freely control the processing of the information from the transmitting means, it is possible to obtain a versatile system applicable to a system for transmitting information recorded on such a recording medium as a VTR or optical disk as well as to a system for transmitting real-time information.

### EMBODIMENT 5

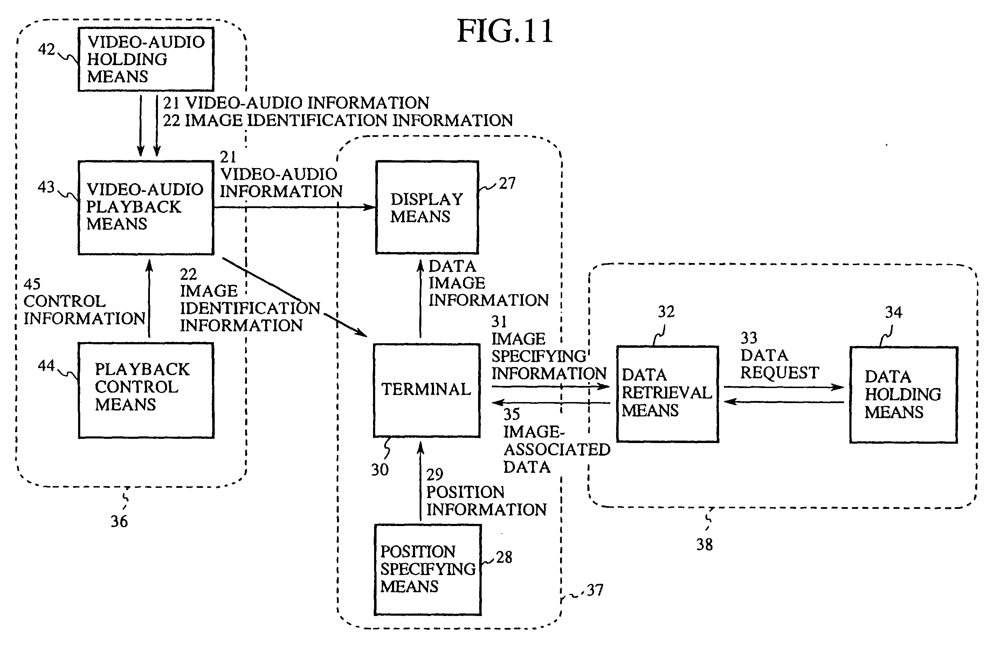

Another embodiment of the image-based information retrieval system according to the present invention will be described below with reference to Fig. 11. Fig. 11 is a block diagram illustrating the configuration of the information retrieval system of Embodiment 5. In Embodiment 5 the transmitting system 36 is made up of the video-audio holding means 42, the video-audio playback means 43 and the playback control means 44. In Fig. 11 the parts identical with or corresponding to those in Embodiment 4 of Fig. 10 are identified by the same reference numerals and will not be described; the following description will be given of parts different from those in Fig. 1 or 10.

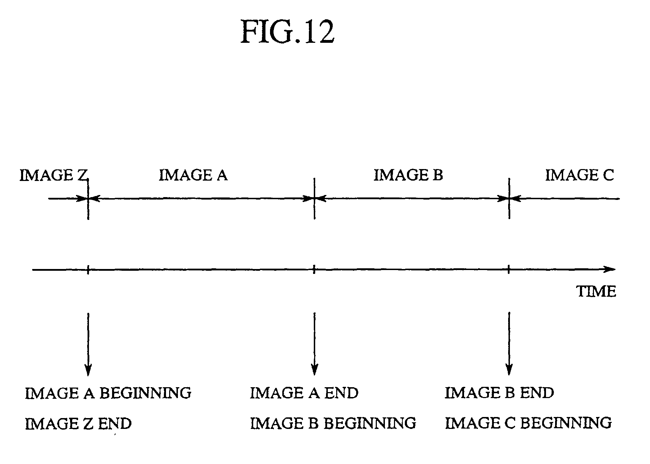

Next, a description will be given, with reference to Fig. 12, of the correlation between the video-audio information 21 and the image identification information 22 in the information retrieval system of Embodiment 5. Fig. 12 is a conceptual diagram showing the correlation between the video-audio information 21 and the image identification information 22 in the information retrieval system of Embodiment 5. In Fig. 12 the image identification information 22 for identifying each of the image segments A to C is provided from the video-audio playback means 43 to the terminal 30 at the image segment display start and end times.

In Fig. 12 the parts identical with or corresponding to those in Embodiment 4 of Fig. 10 are identified by the same reference numerals and has not been described, and the parts different from those in Fig. 10 have been described. Further, the table of the data retrieval means 32 in the information retrieval system of Embodiment 5 is the same as in Embodiment 2 of Fig. 6; hence, no description will be repeated thereof.

Next, a description will be given of the operation of the information retrieval system according to Embodiment 5.

To begin with, the control information 45 on the start of playback is provided from the playback control means 44 to the video-audio playback means 43. Supplied with the control information 45, the video-audio playback means 43 reads out the video-audio information 21 and the image identification information 22 from the video-audio holding means 42 based on the control information 45.

Supplied with the video-audio information 21 and the image identification information 22, the video-audio playback means 43 converts the video-audio information 21 into a form for playback by the display means 27 and provides thereto the converted information and, at the same time, outputs the image identification information 22 to the terminal 30. Incidentally, the image identification information 22 fed to the terminal 30 is held therein. When the video-audio playback means 43 detects the image identification information 22 about the beginning of a certain image segment halfway through the playback or fast forwarding of the video-audio information 21, the image identification information 22 for the image segment detected at the beginning of its display is sent to and recorded in the terminal 30.

When the video-audio playback means 43 detects the image identification information 22 about the end of the display of a certain image segment halfway through the fast reversing of the video-audio information 21, the image identification information 22 for the end-detected image segment is sent to and recorded in the terminal 30. When supplied with the video-audio information 21, the display means 27 outputs images and sounds based on the information 21 input thereinto.

In the case where the playback control means 44 outputs to the video-audio playback means 43 the control information 45 to the effect that the output from the video-audio information is caused to pause, the video-audio playback means 43 responds to the control information 45 to temporarily stop reading the video-audio information 21 into the display means. Since the readout of the image identification information 22 also temporarily stops at the same time as the reading of the video-audio information 21 temporarily stops, the image identification information 22 held in the terminal 30 remains unchanged. The control information 45 for the cancellation of the pause, fast forward and fast reverse is also the same as the control information 45 for the temporary stop, and the video-audio information 21 and the image identification information 22 are processed in correlation with each other, of which no description will be given. The information retrieval system of Embodiment 5 is common to the information retrieval system of Embodiment 4 in the operation from the retrieval of the information about an arbitrary image displayed on the display means 27 to the outputting of the thus obtained information to the display means 27; hence, no description is given thereof, and only the operations different from those of the system of Embodiment 4 are described.

As described above, according to the image-based information retrieval system of this embodiment, the image identification information 22 can be detected at the beginning and end of each image segment forming the video-audio information 21; hence, even if the video-audio information 21 is output after its fast-forwarding or fast-reversing, the image segment concerned can surely be captured. Accordingly, it is possible to obtain a highly reliable system which effectively suppresses variations in the correlation between the image identification information 22 and the data associated therewith.

### EMBODIMENT 6

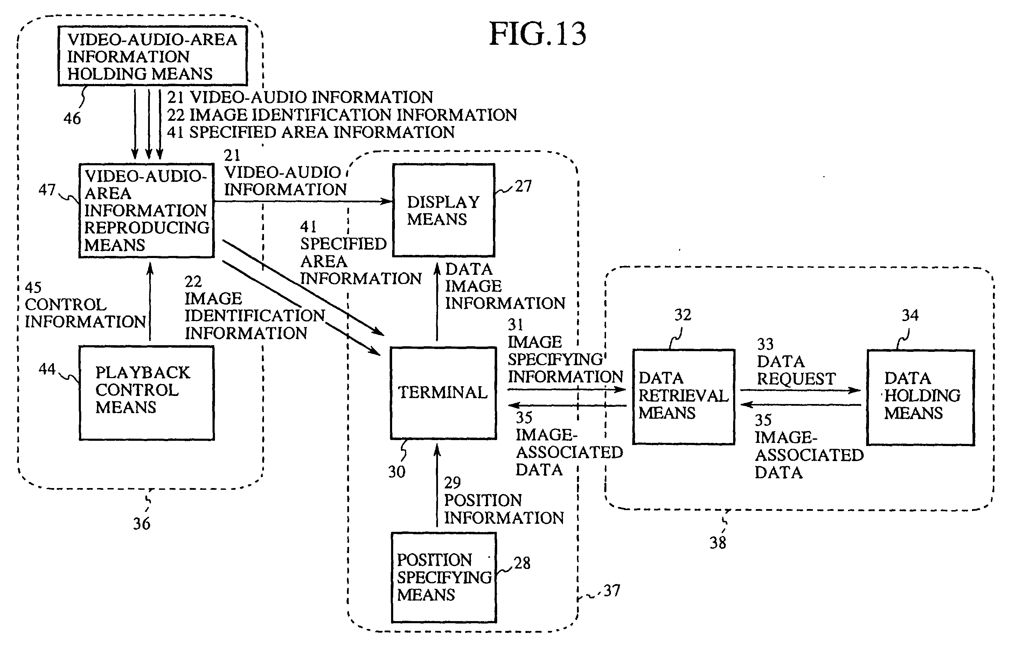

Another embodiment of the image-based information retrieval system according to the present invention will be described with reference to Fig. 13. Fig. 13 is a block diagram illustrating the configuration of the information retrieval system of Embodiment 6.

In Fig. 13 there are recorded in video-audio-area information holding means 46 the video-audio information 21, the image identification information 22 and the specified area information 41. In this instance, the video-audio information, the image identification information 22 and the specified area information 41 are recorded in association with one another. And, video-audio-area information playback means 47 outputs to the display means 27 or terminal 30 the video-audio information 21, the image identification information 22 and the specified area information 41 read out from the video-audio-area information holding means 46. In Fig. 12, the parts identical with or corresponding to those in Embodiment 3 of Fig. 7 or Embodiment 5 of Fig. 11 are identified by the same reference numerals, of which no description is given, but the operations different from those in Fig. 1 to 10 are described.

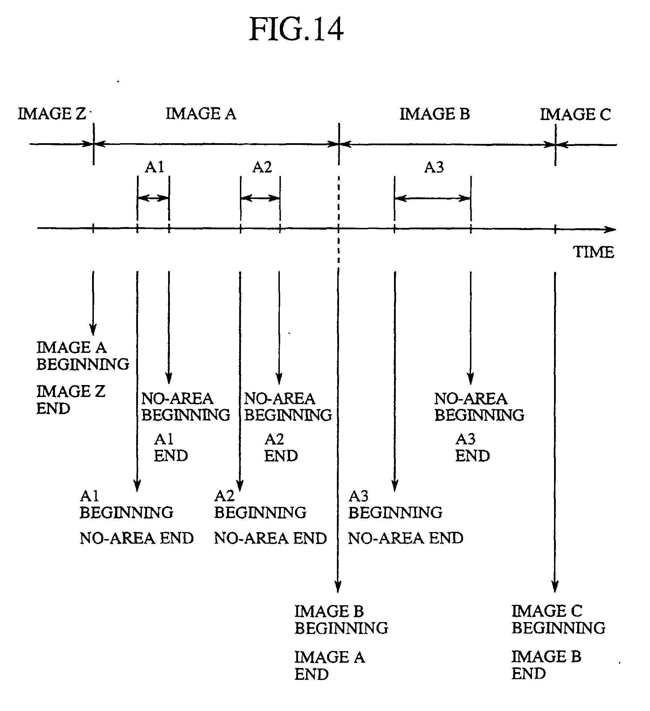

Next, a description will be given, with reference to Fig. 14, of the correlation among the video-audio information 21, the image identification information 22 and the specified area information 41 in the information retrieval system of Embodiment 6. Fig. 14 is a conceptual diagram illustrating the correlation among the video-audio information 21, the image identification information 22 and the specified area information 41 in the information retrieval system of Embodiment 6.

In Fig. 14, the specified area information 41 indicating the specified area inserted in the image segment A is provided from the video-audio-area information playback means 47 at the instant of starting the outputting of the information about the specified area and at the instant of completing the outputting of the image segment. For example, in Fig. 14, area information (no-area end + A1 beginning) is provided from the video-audio-area information playback means 47 upon starting of the outputting of the image A in the area A1, and area information (A1 end + no-area beginning) is provided from the video-audio-area information playback means 47 upon completion of the outputting of the image segment A. The operations for the area A2 and, others are also the same as in the case of the image A in the area A1.

In Fig. 14, the parts identical with or corresponding to those in Embodiment 3 of Fig. 8 are identified by the same reference numerals and no description is given of them, but the operations different from those in Fig. 8 are described. Further, the table of the data retrieval means 32 in the information retrieval system of Embodiment 6 is the same as in Embodiment 3 of Fig. 7, and no description will be repeated thereof.

Next, the operation of the information retrieval system of Embodiment 6 will be described.

The control information about the start of playback of images is provided from the playback control means 44 to the video-audio-area information playback means 47. Based on the control information 45 input thereinto, the video-audio-area information playback means 47 reads out the video-audio information 21, the image identification information 22 and the specified area information 41 from the video-audio-area information holding means 46. The video-audio-area information holding means 47 having thus input thereinto the video-audio information 21, the image identification information 22 and the specified area information 41 converts the video-audio information 21 to a form for playback by the display means 27 and provides thereto the converted information and, at the same time provides the image identification information 22 and the specified area information 41 to the terminal 30. The image identification information 22 and the specified area information 41 fed to the terminal 30 are held therein. In the case where the video-audio-area information playback means 47 detects area information about the beginning of a certain specified area halfway through the playback or fast-forwarding, the specified area information 41 about the beginning-detected specified area is sent to and recorded in the terminal 30. When the video-audio-area information playback means 47 detects area information about the end of a certain specified area halfway through the fast-reversing of the video-audio information 21, the specified area information 41 about the end-detected specified area is sent to and recorded in the terminal 30. When supplied with the video-audio information 21, the display means 27 outputs videos and sounds based on the video-audio information input thereinto.

In the case where the playback control means 44 outputs to the video-audio-area information playback means 47 the control information 45 to the effect that its outputting of the video-audio information 21 is caused to pause, the video-audio-area information playback means 47 responds to the control information 45 to temporarily stop the readout of the video-audio information 21 from the video-audio-area information holding means 46. Since the reading of the image identification information 22 and the specified area information 21 also temporarily stops at the same time as the reading of the video-audio information 21 temporarily stops, the video identification information 22 and the specified area information 41 held in the terminal 30 remain unchanged. The control information 45 for the cancellation of the pause, fast forward and fast reverse is also the same as the control information 45 for the temporary stop, and the video-audio information 21, the image identification information 22 and the specified area information 41 are processed in correlation with one another, of which no description will be given. The information retrieval system of Embodiment 6 is common to the information retrieval system of Embodiment 5 in the operation from the retrieval of the information about an arbitrary image displayed on the display means 27 to the outputting of the thus obtained information to the display means 27; hence, no description is given thereof, and only the operations different from those of the system of Embodiment 5 are described.

As described above, according to the image-based information retrieval system of this embodiment, the area information can be detected at the beginning and end of each image segment forming the video-audio information 21; hence, even if the video-audio information 21 is output after its fast-forwarding or fast-reversing, the specified area concerned can surely be captured. Accordingly, it is possible to obtain a highly reliable system which effectively suppresses variations in the correlation between the specified area information 41 and the data associated therewith are effectively suppressed.

### EMBODIMENT 7

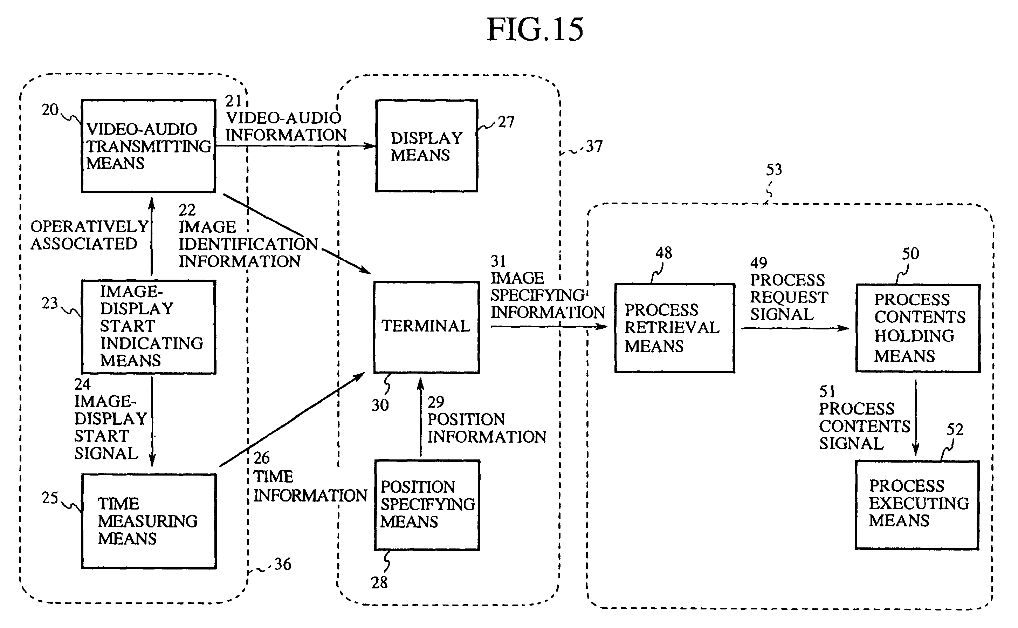

An embodiment of the image-based information processing system according to the present invention will be described below with reference to Fig. 15. Fig. 15 is a block diagram illustrating the configuration of the information processing system according to Embodiment 7.

In Fig. 15, reference numeral 48 denotes process retrieval means, to which the image specifying information 31 is applied from the terminal 30. The process retrieval means 48 has a table in which kinds of images, times specified by the position specifying means 28 and information on positions specified by the position specifying means 28 are stored in association with one another and with process contents, too. Supplied with the image specifying information 31, the process retrieval means 48 outputs a process request signal 49 based on the table contents. Reference numeral 50 denotes a process contents holding means, into which the process request signal 49 is applied from the process retrieval means 48. In response to the process contents request signal 49 fed thereto, the process contents holding means 50 outputs a process contents signal 51 concerning the process contents held in the process contents holding means 50. The process contents held in the process contents holding means 50 are prepared based on the video-audio information 21 prior to its transmission from the video-audio transmitting means 20.

Reference numeral 52 denotes process executing means, which is supplied with the process contents signal 51 from the process contents holding means 50. The process executing means 52 executes the process specified by the process contents signal 51 fed thereto. Reference numeral 53 denotes a processing system, which is made up of the process retrieval means 48, the process contents holding means 50 and the process executing means 52. The processing system 53 may be shared by a plurality of receiving systems over the Internet or similar network. If necessary, however, it may also be placed at the same location as the receiving system 37, not on the network. In Fig. 15 the parts identical with or corresponding to those in Embodiment 1 of Fig. 1 are identified by the same reference numerals, of which no description is given, but the parts different from those in Fig. 1 has been described. Further, the correlation among the video-audio information 21, the image identification information 22 and the time information 26 in the information retrieval system of Embodiment 7 is the same as in Embodiment 1 of Fig. 2, and no description will be repeated in this respect.

The information processing system of Embodiment 7 executes a process that corresponds to a specified position in a display image of a TV broadcast or satellite broadcasting, and a possible use of this system is, for example, an ordering process in a TV shopping program.

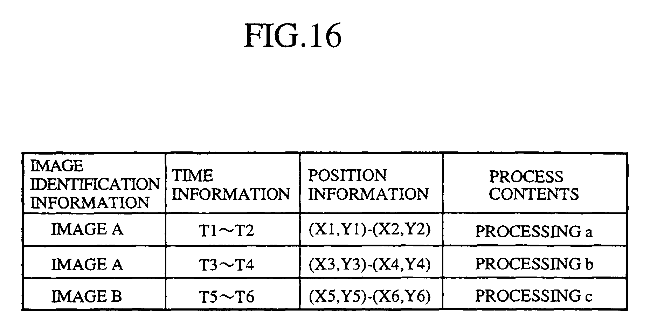

Next, a description will be given, with reference to Fig, 16, of the table of the process retrieval means 48 in the information processing system of Embodiment 7. Fig. 16 is a conceptual diagram of the table of the process retrieval means 48 in the information processing system of Embodiment 7.

In Fig. 16, there are recorded on the table of the process information retrieval means 48 the kinds of image segments forming the video-audio information 21, position information about the positions of icons that appear at the output timing of the image segments, and the kinds of process contents that are each processed when the corresponding icon is specified, these pieces of information being recorded in association with one another. Incidentally, icon manipulations are the same as previously referred to with respect to Fig. 3 which is explanatory of Embodiment 1, and hence no description will be repeated. For the same image identification information, different pieces of position information and the process contents corresponding thereto may also be present in the same time slot. Moreover, process contents need not always be set for every image identification information, every time information and every position information.

Next, the operation of this embodiment will be described. Since the information processing system of Embodiment 7 is common to Embodiment 1 in the operations until the image specifying information 31 is output from the terminal 30, no description will be repeated, but operations different from those in the information retrieval system of Embodiment 1 will be described below.

When the user specifies a certain point in the display image through the position specifying means 28, the terminal 30 provides the image specifying information 31 to the process retrieval means 48.

When supplied with the image specifying information 31, the process information retrieval means 48 retrieves its table for the information corresponding to the image specifying information 31 input thereinto. Based on the results of retrieval, the process information retrieval means applies to the process contents holding means 50 the process request signal 49 for the process contents concerned. When no process contents corresponding to the image specifying information are retrieved, no process request signal 49 is produced and no further processing takes place. The process request signal 49 from the process retrieval means 48 is fed to the process contents holding means 50. The process contents holding means 50 responds to the process request signal 49 to retrieve the process contents signal 51 corresponding thereto, and provides to the process executing means 52 a command for the process contents signal 51. The process executing means 52 responds to the process contents signal 51 to execute a predetermined process.

As described above, the image-based information processing system of this embodiment executes the process associated with an arbitrary point specified by the position specifying means 28 in an arbitrary object displayed on the display means 27. And, this system executes the process based on the position information 29 that is the X-Y coordinates of the arbitrary point on the display means 27 specified by the position specifying means 28, and the time information 26 that is the time when the position was specified. That is, this system executes the image-associated process by specifying the coordinates of an arbitrary point of the display image on the display means 27 at an arbitrary point in time.

Accordingly, this system need not retain every frame information concerning images, that is, the system does not need to hold an enormous amount of information--this permits downsizing of the process retrieval means 48 and the entire system configuration. Furthermore, this system does not require any processing unit for detecting a particular frame, and hence it can easily be downsized in its entirely. Moreover, this system does not involve processing for detecting a particular frame, which permits reduction of time preceding the execution of the process associated with the specified image. Besides, since predetermined time slots and areas for specifying the coordinates on the display means 27 are preset on the table of the process retrieval means 48, this system need not retain information for the execution of the associated process set in every frame containing the image to be displayed, that is, the system does not need to hold a massive amount of information, which permits simplification of the table of the process retrieval means 48 and/or the process information retrieval means 48 itself. In addition, since the video-audio information 21 and the time information 26 are output from the transmitting system 36 of this system in relation to each other, the same information associated with an arbitrary image can be obtained in a plurality of receiving system 37 of different locations even if the video-audio information 21 and the time information 26 are received by the different receiving systems 37. In the case where the video-audio information 21 is sent from the transmitting system 36 and the plurality of receiving systems 37, which receive the video-audio information 21 from the transmitting system 36, individually calculate the time information 26 and begin to measure the time information 26 simultaneously with the start of outputting of the video-audio information 21 from the transmitting system 36, the time of arrival of the video-audio information 21 at the receiving systems varies according to their location, incurring the possibility that the information associated with the same image differs with the individual receiving systems 37.

### EMBODIMENT 8

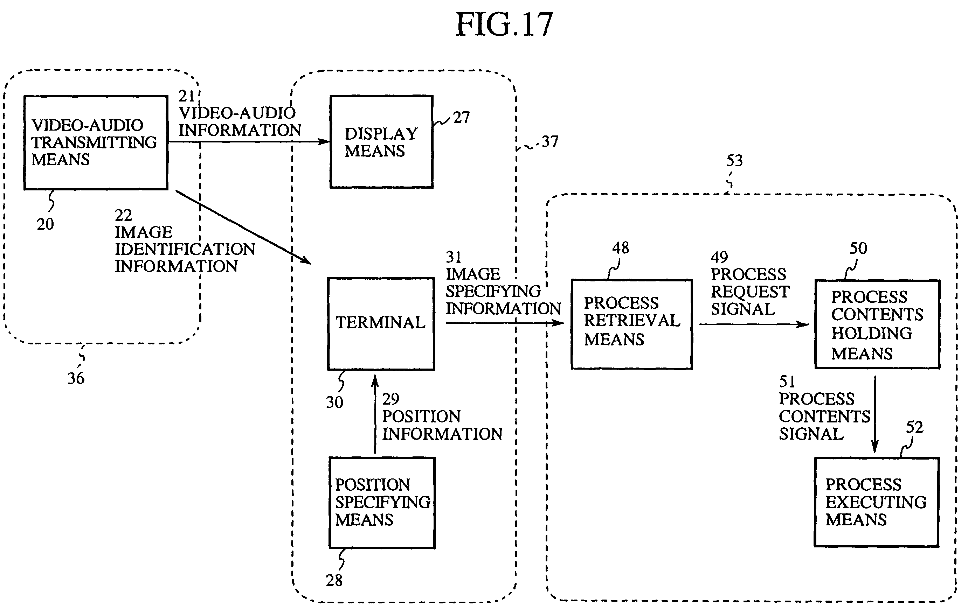

Another embodiment of the information processing system according to the present invention will be described with reference to Fig. 17. Fig. 17 is a block diagram illustrating the configuration of the information processing system of Embodiment 8. In the information processing system of Fig. 17, the transmitting system 36 is identical with that used in Embodiment 2, and no description will be repeated thereof. And, in Fig. 17 the receiving system 37 and the processing system 53 are the same as those in Embodiment 7, and no description will be repeated thereof. Further, the correlation between the video-audio information 21 and the image identification information 22 in the information processing system of Embodiment 8 is the same as in Embodiment 2 of Fig. 5, and no description will be repeated, either.

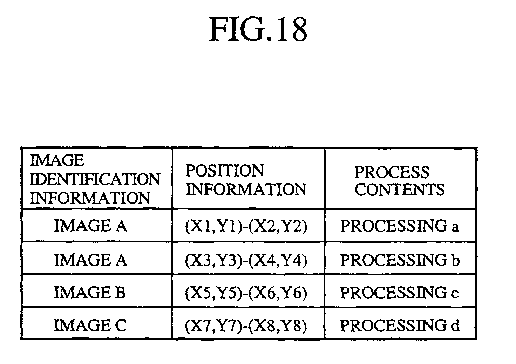

Next, a description will be given, with reference to Fig, 18, of the table of the process retrieval means 48 in the information processing system of Embodiment 8. Fig. 18 is a conceptual diagram of the table of the process retrieval means 48 in the information processing system of Embodiment 7.

In Fig. 18, there are recorded on the table of the process retrieval means 48 the kinds of image segments forming the video-audio information 21, position information about the positions of icons that appear at the output timing of the image segments, and the kinds of process contents that are each processed when the corresponding icon is specified, these pieces of information being recorded in association with one another. Incidentally, different process contents may also be set corresponding to a plurality of different pieces of position information in the same image identification information. Moreover, process contents need not always be set for every image identification information and position information.

Next, the operation of this embodiment will be described. Since the information processing system of Embodiment 8 is common to Embodiment 2 in the operations preceding the outputting of the image specifying information 31 from the terminal 30, no description will be repeated. Further, this information processing system is also common to Embodiment 7 in the operations following the outputting of the image specifying information from the terminal 30, of which no description will be repeated. With the configuration and operation of the information processing system of Embodiment 8, it is possible to obtain the same effects as are obtainable with the system of Embodiment 2 or 7.

### EMBODIMENT 9

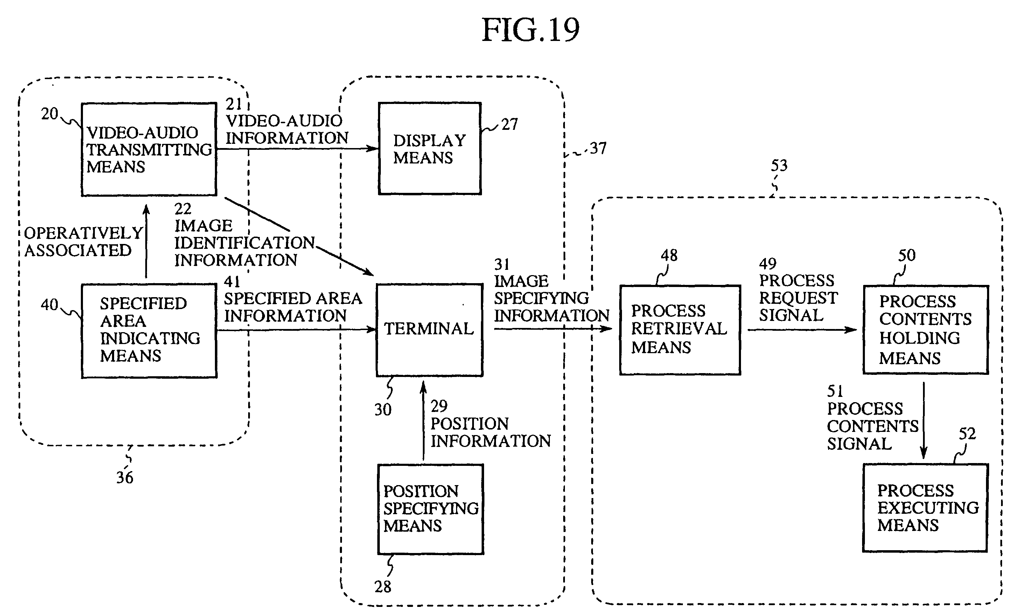

Another embodiment of the information processing system according to the present invention will be described with reference to Fig. 19. Fig. 19 is a block diagram illustrating the configuration of the information processing system of Embodiment 9. In the information processing system of Fig. 19, the transmitting system 36 is identical with that used in Embodiment 3, and no description will be repeated thereof. And, in Fig. 19 the receiving system 37 and the processing system 53 are the same as those in Embodiment 7, and no description will be repeated thereof. Further, the correlation among the video-audio information 21, the image identification information 22 and the specified area information 41 in the information processing system of Embodiment 9 is the same as in Embodiment 3 of Fig. 8, and no description will be repeated, either.

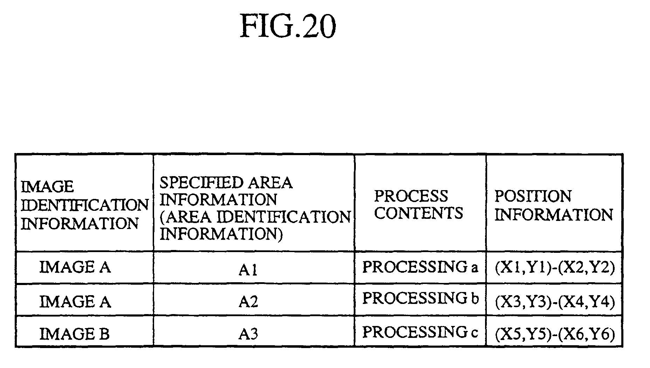

Next, a description will be given, with reference to Fig. 20, of the table of the process information retrieval means 48 in the information processing system of Embodiment 9. Fig. 20 is a conceptual diagram of the table of the process information retrieval means 48 in the information processing system of Embodiment 8. In Fig. 20, there are recorded on the table of the process information retrieval means 48 the kinds of image segments forming the video-audio information 21, the presence of absence of the most recently recognized specified area information or its kind, position information about the positions of icons that appear at the output timing of the image segments or the specified area information, and the process contents that are each processed when the corresponding icon is specified, these pieces of information being recorded in association with one another. Incidentally, different process contents may also be set corresponding to a plurality of different pieces of position information in the same image identification information. Moreover, process contents need not always be set for every image identification information and position information.

Next, the operation of this embodiment will be described. Since the information processing system of Embodiment 9 is common to Embodiment 3 in the operations preceding the outputting of the image specifying information 31 from the terminal 30, no description will be repeated. Further, this information processing system is also common to Embodiment 7 in the operations following the outputting of the image specifying information 31 from the terminal 30, of which no description will be repeated. With the configuration and operation of the information processing system of Embodiment 9, it is possible to obtain the same effects as are obtainable with the system of Embodiment 3 or 7.

### EMBODIMENT 10

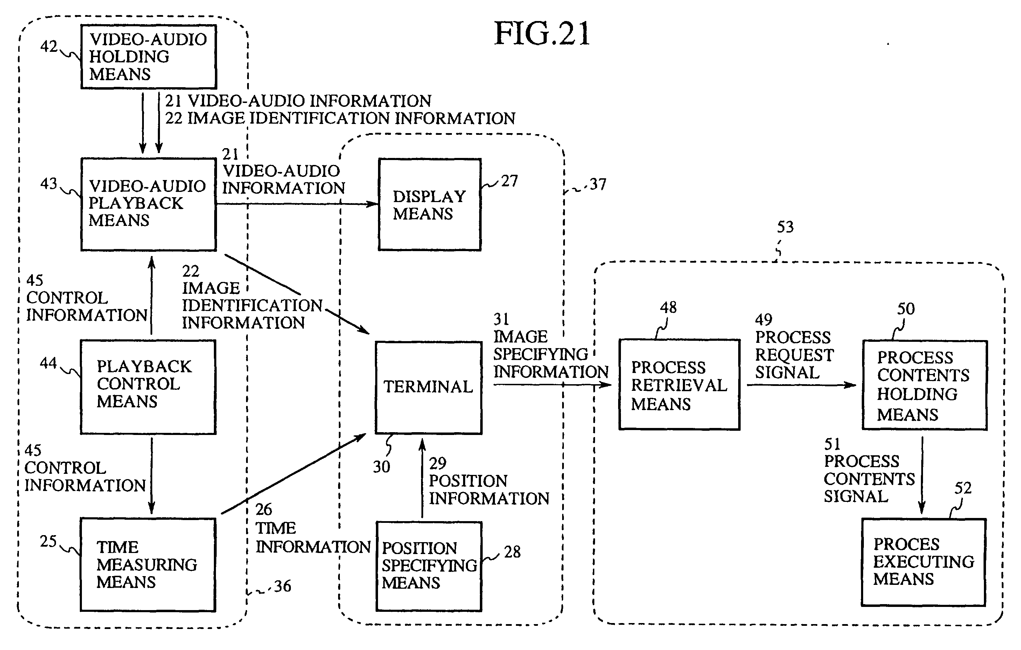

Another embodiment of the information processing system according to the present invention will be described with reference to Fig. 21.

Fig. 21 is a block diagram illustrating the configuration of the information processing system of Embodiment 10. In the information processing system of Fig. 21, the transmitting system 36 is identical with that used in Embodiment 4, and no description will be repeated thereof. And, in Fig. 21 the receiving system 37 and the processing system 53 are the same as those in Embodiment 7, and no description will be repeated thereof. Further, the correlation among the video-audio information 21, the image identification information 22 and the time information 13 based on the image start signal 24 in the information processing system of Embodiment 10 is the same as in Embodiment 1 of Fig. 2, and no description will be repeated, either. Moreover, the table of the process information retrieval means 48 in the information processing system of Embodiment 10 is also the same as in Embodiment 7 of Fig. 16, and no description will be repeated thereof.

Next, the operation of this embodiment will be described. Since the information processing system of Embodiment 10 is common to Embodiment 4 in the operations preceding the outputting of the image specifying information 31 from the terminal 30, no description will be repeated. Further, this information processing system is also common to Embodiment 7 in the operations following the outputting of the image specifying information 31 from the terminal 30, of which no description will be repeated. With the configuration and operation of the information processing system of Embodiment 10, it is possible to obtain the same effects as are obtainable with the system of Embodiment 4 or 7.

### EMBODIMENT 11

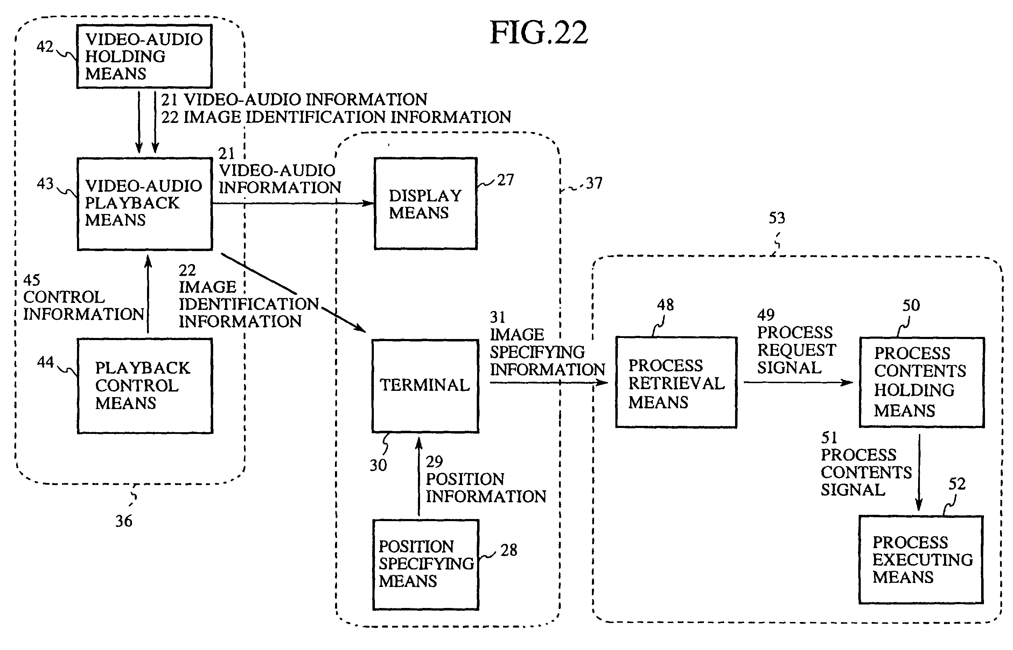

Another embodiment of the information processing system according to the present invention will be described with reference to Fig. 22. Fig. 22 is a block diagram illustrating the configuration of the information processing system of Embodiment 11. In the information processing system of Fig. 22, the transmitting system 36 is identical with that used in Embodiment 5, and no description will be repeated thereof. And, in Fig. 22 the receiving system 37 and the processing system 53 are the same as those in Embodiment 7, and no description will be repeated thereof. Further, the correlation between the video-audio information 21 and the image identification information 22 is the same as in Embodiment 5 of Fig. 12, and no description will be repeated, either. Moreover, the table of the process retrieval means 48 in the information processing system of Embodiment 11 is also the same as in Embodiment 7 of Fig. 16, and no description will be repeated thereof.

Next, the operation of this embodiment will be described. Since the information processing system of Embodiment 11 is common to Embodiment 5 in the operations preceding the outputting of the image specifying information 31 from the terminal 30, no description will be repeated. Further, this information processing system is also common to Embodiment 7 in the operations following the outputting of the image specifying information 31 from the terminal 30, of which no description will be repeated. With the configuration and operation of the information processing system of Embodiment 11, it is possible to obtain the same effects as are obtainable with the system of Embodiment 5 or 7.

### EMBODIMENT 12

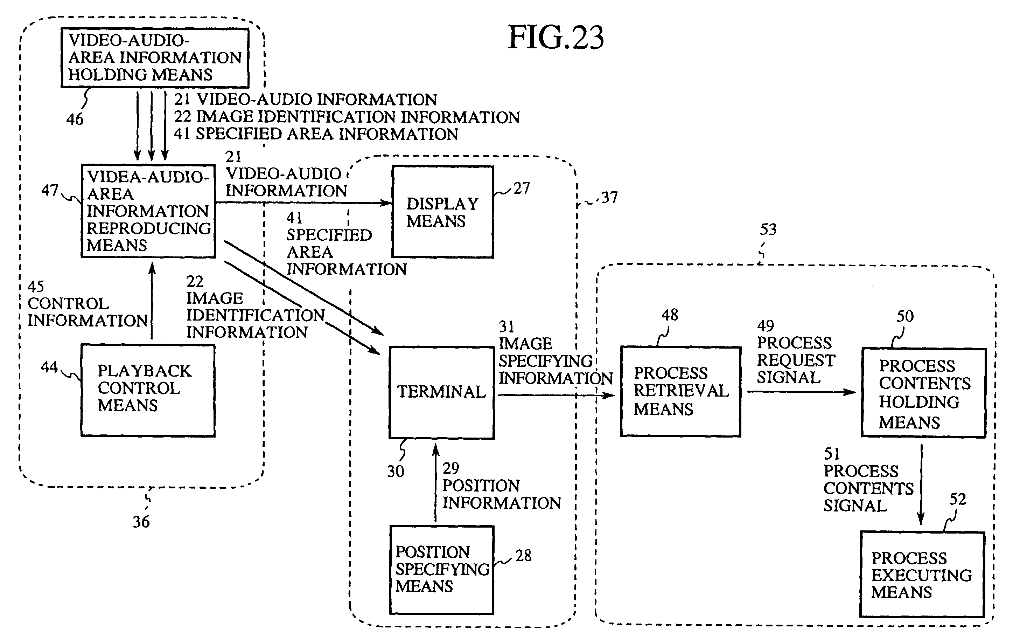

Another embodiment of the information processing system according to the present invention will be described with reference to Fig. 23. Fig. 23 is a block diagram illustrating the configuration of the information processing system of Embodiment 12. In the information processing system of Fig. 23, the transmitting system 36 is identical with that used in Embodiment 6, and no description will be repeated thereof. And, in Fig. 23 the receiving system 37 and the processing system 53 are the same as those in Embodiment 7, and no description will be repeated thereof. Further, the correlation among the video-audio information 21, the image identification information 22 and the specified area information 41 is the same as in Embodiment 6 of Fig. 14, and no description will be repeated, either.

Next, the operation of this embodiment will be described. Since the information processing system of Embodiment 12 is common to Embodiment 6 in the operations preceding the outputting of the image specifying information 31 from the terminal 30, no description will be repeated. Further, this information processing system is also common to Embodiment 7 in the operations following the outputting of the image specifying information 31 from the terminal 30, of which no description will be repeated. With the configuration and operation of the information processing system of Embodiment 12, it is possible to obtain the same effects as are obtainable with the system of Embodiment 6 or 7.

As described above, the information retrieval system according to an aspect of the present invention comprises: transmitting means which outputs image information and image identification information indicating the kind of the image information; display means which displays an image based on the image information; position specifying means which specifies a desired position in the image displayed on the display means and outputs position information based on the specified position; and data holding means which hold data associated with the image specified by the position specifying means based on the position information and the image identification information. Since in this system the data associated with the image specified by the position specifying means is fed to the display means based on the kind of the specified image and its coordinates on the display means, the amount of data that the data holding means is required to hold can be suppressed, and the system can be downsized in its entirety.

The information retrieval system according to another aspect of the present invention comprises: transmitting means which outputs image information, image identification information indicating a change in the kind of image information and time information about the elapsed time after the change in the kind of image information; display means which displays an image based on the image information; position specifying means which specifies a desired position in the image displayed on the display means and outputs position information based on the specified position; and data holding means which holds data associated with the image specified by the position specifying means based on the position information, the image identification information and the time information. Since in this system the data associated with the image specified by the position specifying means is fed to the display means based on the time interval during which the specified image was output and its coordinates specified by the position specifying means on the display means during that time interval, the amount of data that the data holding means is required to hold can be suppressed, and the system can be downsized in its entirety.

The information retrieval system according to another aspect of the present invention comprises: transmitting means which outputs image information, image identification information indicating the kind of the image information and specified area information indicating the presence or absence of interrupt information during the outputting of the image information; display means which displays an image based on the image information; position specifying means which specifies a desired position in the image displayed on the display means and outputs position information based on the specified position; and data holding means which holds data associated with the image specified by the position specifying means based on the position information, the image identification information and the specified area information. Since in this system the data associated with the image specified by the position specifying means is fed to the display means based on the timing at which the specified image was output and its coordinates specified by the position specifying means on the display means at this timing, the amount of data that the data holding means is required to hold can be suppressed, and the system can be downsized in its entirety.

The information processing system according to another aspect of the present invention comprises: transmitting means which outputs image information and image identification information indicating the kind of the image information; display means which displays an image based on the image information; position specifying means which specifies a desired position in the image displayed on the display means and outputs position information based on the specified position; and process executing means which executes a process associated with the image specified by the position specifying means based on the position information and the image identification information. Since in this system the process associated with the image specified by the position specified means is executed by the process executing means based on the kind of the specified image and its coordinates on the display means, the amount of data to which the process executing means is required to refer can be suppressed, and the system can be downsized in its entirety.

The information retrieval system according to another aspect of the present invention comprises: transmitting means which outputs image information, image identification information indicating a change in the kind of image information and time information about the elapsed time after the change in kind of the image information; display means which displays an image based on the image information; position specifying means which specifies a desired position in the image displayed on the display means and outputs position information based on the specified position; and process executing means which executes a process associated with the image specified by the position specifying means based on the position information, the image identification information and the time information. Since in this system the data associated with the image specified by the position specifying means is fed to the display means based on the time interval during which the specified image was output and its coordinates specified by the position specifying means on the display means during that time interval, the amount of data to which the process executing means is required to refer can be suppressed, and the system can be downsized in its entirety.

The information retrieval system according to still another aspect of the present invention comprises: transmitting means which outputs image information, image identification information indicating the kind of the image information and specified area information indicating the presence or absence of interrupt information during the outputting of the image information; display means which displays an image based on the image information; position specifying means which specifies a desired position in the image displayed on the display means and outputs position information based on the specified position; and process executing means which executes a process associated with the image specified by the position specifying means based on the position information, the image identification information and the specified area information. Since in this system the process associated with the image specified by the position specifying means is executed by the process executing means based on the timing at which the specified image was output and its coordinates specified by the position specifying means on the display means at this timing, the amount of data to which the process executing means is required to refer can be suppressed, and the system can be downsized in its entirety.

The information retrieval system or information processing system according to the present invention includes control means for controlling the transmission of image information from the transmitting means and freely controls the processing of information that is output from the transmitting means; therefore, it is possible to implement a highly versatile system applicable to a system which transmits information recorded on a VTR, optical disk or similar recording medium as well as to a system which transmits real-time information.

### INDUSTRIAL APPLICABILITY

The present invention is directed to a system in which information associated with a predetermined image in a moving picture can be retrieved based on instructions from an input part; in particular, the invention pertains to an information retrieval system which retrieves information associated with a specified image in a moving picture of a TV broadcast, satellite television or video, and an information processing system which executes a process associated with the specified image of the moving picture.

## Claims

1. An information retrieval system characterized by:
transmitting means which outputs image information and image identification information indicating the kind of said image information;
display means which displays an image based on said image information;
position specifying means which specifies an arbitrary position in said image displayed on said display means and outputs position information based on the specified position; and
data holding means which, based on said position information and said image identification information, holds data associated with said image specified by said position specifying means;
wherein the data associated with said image specified by said position specifying means is displayed on said display means.

2. An information retrieval system characterized by:
transmitting means which outputs image information, image identification information indicating a change in the kind of said image information, and time information about the elapsed time after the change in the kind of said image information;
display means which displays an image based on said image information;
position specifying means which specifies an arbitrary position in said image displayed on said display means and outputs position information based on the specified position; and
data holding means which, based on said position information, said image identification information and said time information, holds data associated with said image specified by said position specifying means;
wherein the data associated with said image specified by said position specifying means is displayed on said display means.

3. An information retrieval system characterized by:
transmitting means which outputs image information, image identification information indicating the kind of said image information, and specified area information indicating the presence or absence of interrupt information during the outputting of said image information;
display means which displays an image based on said image information;
position specifying means which specifies an arbitrary position in said image displayed on said display means and outputs position information based on the specified position; and
data holding means which, based on said position information, said image identification information and said specified area information, holds data associated with said image specified by said position specifying means;
wherein the data associated with said image specified by said position specifying means is displayed on said display means.

4. An information processing system characterized by:
transmitting means which outputs image information and image identification information indicating the kind of said image information;
display means which displays an image based on said image information;
position specifying means which specifies an arbitrary position in said image displayed on said display means and outputs position information based on the specified position; and
process executing means which, based on said position information and said image identification information, executes a process associated with said image specified by said position specifying means.

5. An information processing system characterized by:
transmitting means which outputs image information, image identification information indicating a change in the kind of said image information, and time information about the elapsed time after the change in the kind of said image information;
display means which displays an image based on said image information;
position specifying means which specifies an arbitrary position in said image displayed on said display means and outputs position information based on the specified position; and
process executing means which, based on said position information, said image identification information and said time information, executes a process associated with said image specified by said position specifying means.

6. An information processing system characterized by:
transmitting means which outputs image information, image identification information indicating the kind of said image information, and specified area information indicating the presence or absence of interrupt information during the outputting of said image information;
display means which displays an image based on said image information;
position specifying means which specifies an arbitrary position in said image displayed on said display means and outputs position information based on the specified position; and
process executing means which, based on said position information, said image identification information and said specified area information, executes a process associated with said image specified by said position specifying means.

7. The information retrieval system or information processing system according to any one of claims 1 to 6, characterized by:
control means for controlling the outputting of image information which is transmitted from said transmitting means.
